## Europäisches Patentamt
## European Patent Office
## Office européen des brevets

(19)

(11) Veröffentlichungsnummer : **0 014 274 B1**

(12) **EUROPÄISCHE PATENTSCHRIFT**

(45) Veröffentlichungstag der Patentschrift :
07.12.83

(51) Int. Cl.³ : **C 21 B 13/14, C 21 C 5/52**

(21) Anmeldenummer : 79200787.4

(22) Anmeldetag : 20.12.79

(54) Verfahren zur Erzeugung von Stahl.

(30) Priorität : 13.02.79 DE 2905339

(43) Veröffentlichungstag der Anmeldung :
20.08.80 Patentblatt 80/17

(45) Bekanntmachung des Hinweises auf die Patenterteilung : 07.12.83 Patentblatt 83/49

(84) Benannte Vertragsstaaten :
DE

(56) Entgegenhaltungen :
DE-A- 1 914 635
DE-A- 1 942 541
DE-A- 2 529 391
DE-B- 1 263 794
DE-B- 2 608 320
US-A- 3 001 863
US-A- 3 754 890
TECHNISCHE MITTEILUNGEN KRUPP FORSCH.BER.
Band 34, Nr. 3, Dezember 1976, Essen, DE, G. MEYER
et al.: "Verarbeitung von Eisenschwamm nach dem
Krupp-Eisenschwamm-Einschmelz-Verfahren (Krupp
Sponge Iron Melting Process), Seiten 153-158

(73) Patentinhaber : METALLGESELLSCHAFT AG
Reuterweg 14 Postfach 3724
D-6000 Frankfurt/M.1 (DE)

(72) Erfinder : Serbent, Harry, Dr. Dipl.-Ing.
Gustav-Hoch-Strasse 5
D-6450 Hanau (DE)
Erfinder : Reuter, Gerhard, Dr. Dipl.-Ing.
Steinhausenstrasse 15
D-6000 Frankfurt am Main 70 (DE)
Erfinder : Schnabel, Wolfram, Dr. Dipl.-Ing.
Goethestrasse 7
D-6234 Hattersheim (DE)
Erfinder : Eichberger, Heinz, Dipl.-Ing.
Am Scheilberg 28
D-6232 Bad Soden (DE)

(74) Vertreter : Fischer, Ernst, Dr.
Reuterweg 14
D-6000 Frankfurt am Main 1 (DE)

Verfahren zur Erzeugung von Stahl

Die Erfindung betrifft ein Verfahren zur Erzeugung von Stahl durch Direktreduktion von eisenoxidhaltigen Stoffen und Einschmelzen des Eisenschwamms nach dem Elektro-Schlacke-Widerstandsverfahren.

Hüttenmännische Reststoffe, wie insbesondere Hochofenstäube, LD-Stäube und LD-Schlämme, enthalten beträchtliche Mengen an NE-Metallen oder deren Verbindungen. Aus diesem Grund können sie nicht ohne weitgehende Entfernung des NE-Metallgehaltes wieder in den Hochofen oder bei der Stahlherstellung eingesetzt werden.

Die Entfernung der NE-Metalle oder deren Verbindungen kann durch reduzierende Behandlung mittels fester, kohlenstoffhaltiger Reduktionsmittel im Drehrohrofen erfolgen. Die verflüchtigungsfähigen NE-Metalle oder deren Verbindungen werden dabei im Abgas aus dem Drehrohrofen abgeführt und daraus abgeschieden und gewonnen. Der oxidische Eisengehalt wird zu Eisenschwamm reduziert und im festen Austragsmaterial aus dem Drehrohrofen ausgetragen. Da als NE-Metall praktisch immer Zn oder dessen Verbindungen in den Reststoffen enthalten ist, und zu dessen weitgehender Verflüchtigung sowie für eine weitgehende Metallisierung des oxidischen Eisengehaltes ein Überschuß an festem, kohlenstoffhaltigem Material im Drehrohrofen erforderlich ist, enthält der feste Austrag aus dem Drehrohrofen überschüssigen Kohlenstoff.

Es ist auch bekannt, Eisenschwamm nach dem Elektro-Schlacke-Widerstandsverfahren einzuschmelzen und auf Stahl zu verarbeiten (« Stahl und Eisen » 97 (1977), Seiten 12-17). Dabei wurde jedoch ein Eisenschwamm eingesetzt, der nach einem Gas-Reduktionsverfahren erzeugt wurde, d. h. der kein festes kohlenstoffhaltiges Material enthielt. Ein Einsatz von Eisenschwamm mit einem hohen Anteil an überschüssigem Kohlenstoff — wie er bei der Direktreduktion oder dem Wälzen im Drehrohrofen mit festen, kohlenstoffhaltigen Reduktionsmitteln anfällt — würde stören, da mehr Kohlenstoff vorliegt als für die End-Reduktion erforderlich ist und der Überschuß stark schwankt. Der überschüssige Kohlenstoff kann zwar durch Siebung und Magnetscheidung vom Eisenschwamm abgetrennt werden, dann durch Flotation oder elektrostatische Trennung von der Kohlenasche abgetrennt und in den Drehrohrofen zurückgeführt werden. Dabei fällt jedoch wieder die Kohlenasche als Reststoff an. Der Absatz dieser Kohlenasche ist wegen ihrer Feinkörnigkeit jedoch problematisch. Außerdem enthält die Kohlenasche noch gewisse Mengen an Kohlenstoff und Eisen, die verloren gehen.

Der Erfindung liegt die Aufgabe zugrunde, den bei der Verarbeitung von hüttenmännischen oxidischen Reststoffen mit verflüchtigungsfähigen NE-Metallen oder deren Verbindungen nach dem Verfahren der Direktreduktion oder dem Wälzverfahren im Drehrohrofen mittels fester, kohlenstoffhaltiger Reduktionsmittel anfallenden, eisenschwammhaltigen Austrag des Drehrohrofens in wirtschaftlicher und einfacher Weise nach dem Elektro-Schlacke-Widerstandsverfahren zu verarbeiten.

Die Lösung dieser Aufgabe erfolgt erfindungsgemäß dadurch, daß

a) hüttenmännische oxidische Reststoffe, die verflüchtigungsfähige NE-Metalle oder deren Verbindungen enthalten, mit festen, kohlenstoffhaltigen Reduktionsmitteln im Drehrohrofen unter weitgehender Verflüchtigung der NE-Metalle weitgehend zu Schwammeisen reduziert werden,

b) der Austrag des Drehrohrofens je nach Zerfallverhalten und Aufgabekörnung der Reststoffe bei 3 bis 10 mm abgesiebt wird, so daß der überwiegende Teil seines unmagnetischen Anteils im Feinkorn anfällt,

c) das Grobkorn in das Elektro-Schlacke-Widerstandsverfahren eingesetzt wird,

d) das Feinkorn einer elektromagnetischen Scheidung unterworfen wird,

e) die magnetische Fraktion in das Elektro-Schlacke-Widerstandsverfahren eingesetzt wird, und

f) die unmagnetische Fraktion durch Rollieren oder Pelletieren in die Aufgabemischung für den Drehrohrofen eingebunden wird.

Eine Ausführung besteht darin, daß die unmagnetische Fraktion vor dem Einbinden in die Aufgabemischung aufgemahlen wird. Diese Aufmahlung wird dann durchgeführt, wenn eine weitgehende Einbindung der unmagnetischen Fraktion in die Aufgabemischung sonst nicht möglich ist.

Eine bevorzugte Ausgestaltung besteht darin, daß die Absiebung gemäß (b) heiß erfolgt, und das Feinkorn vor der Scheidung gemäß (d) auf eine Temperatur unterhalb 750 °C abgekühlt wird. Dadurch werden Kühlkosten gespart und der Wärmeinhalt des Austragsgutes kommt zum Teil dem Elektro-Schlacke-Widerstandsverfahren zugute.

Eine bevorzugte Ausgestaltung besteht darin, daß gemäß (b) über 80 % des unmagnetischen Anteils im Feinkorn anfallen. Dadurch werden besonders gute Ergebnisse im Gesamtverfahren erzielt.

Die Vorteile der Erfindung bestehen darin, daß durch die spezielle, technisch und wirtschaftlich einfache Behandlung des Austragsgutes des Drehrohrofens dessen Einsatz in das Elektro-Schlacke-Widerstandsverfahren möglich ist, ohne daß ein zusätzlicher Reststoff anfällt. Der in den Drehrohrofen eingesetzte Kohlenstoff wird durch die Einbindung der unmagnetischen Fraktion — welche hauptsächlich aus dem überschüssigen Kohlenstoff und der Kohlenasche besteht — vollständig im Drehrohrofen ausgenutzt. Außerdem wird durch die Einbindung relativ viel träger, fester Kohlenstoff in die Aufgabemischung gebracht, der zu guten Verflüchtigungsergebnissen der NE-Metalle oder deren Verbindungen führt.

### Ansprüche

1. Verfahren zur Erzeugung von Stahl durch Direktreduktion von eisenoxidhaltigen Stoffen und Einschmelzen des Eisenschwamms nach dem Elektro-Schlacke-Widerstandsverfahren, dadurch gekennzeichnet, daß

a) hüttenmännische oxidische Reststoffe, die verflüchtigungsfähige NE-Metalle oder deren Verbindungen enthalten, mit festen, kohlenstoffhaltigen Reduktionsmitteln im Drehrohrofen unter weitgehender Verflüchtigung der NE-Metalle weitgehend zu Schwammeisen reduziert werden,

b) der Austrag des Drehrohrofens je nach Zerfallsverhalten und Aufgabekörnung der Reststoffe bei 3 bis 10 mm abgesiebt wird, so daß der überwiegende Teil seines unmagnetischen Anteils im Feinkorn anfällt,

c) das Grobkorn in das Elektro-Schlacke-Widerstandsverfahren eingesetzt wird,

d) das Feinkorn einer elektromagnetischen Scheidung unterworfen wird,

e) die magnetische Fraktion in das Elektro-Schlacke-Widerstandsverfahren eingesetzt wird, und

f) die unmagnetische Fraktion durch Rollieren oder Pelletieren in die Aufgabemischung für den Drehrohrofen eingebunden wird.

2. Verfahren nach Anspruch 1, dadurch gekennzeichnet, daß die unmagnetische Fraktion vor dem Einbinden in die Aufgabemischung aufgemahlen wird.

3. Verfahren nach Anspruch 1 oder 2, dadurch gekennzeichnet, daß die Absiebung gemäß (b) heiß erfolgt, und das Feinkorn vor der Scheidung gemäß (d) auf eine Temperatur unterhalb 750 °C abgekühlt wird.

4. Verfahren nach einem der Ansprüche 1 bis 3, dadurch gekennzeichnet, daß gemäß (b) über 80% des unmagnetischen Anteils im Feinkorn anfallen.

### Claims

1. A steelmaking process in which materials containing iron oxide are directly reduced and the sponge iron is melted by the electro-slag resistance process, characterized in that

a) metallurgical residual materials which contain oxides and volatilizable nonferrous metals or compounds thereof are treated in a rotary kiln with solid carbonaceous reducing agents and are thus reduced in a high proportion to sponge iron whereas a substantial part of their nonferrous metal content is volatilized ;

b) the solids discharged from the rotary kiln are sieved with a parting size of 3 to 10 mm, depending on the feed grading of the residual materials and their disintegration characteristics, so that a major part of the unmagnetic material is included in the fine fraction ;

c) the coarse fraction is subjected to the electro-slag resistance process ;

d) the fine fraction is subjected to an electromagnetic separation ;

e) the magnetic fraction is subjected to the electro-slag resistance process, and

f) the unmagnetic fraction is incorporated in and bonded to the feed mixture for the rotary kiln by a rolling or pelletizing operation.

2. A process according to claim 1, characterized in that the unmagnetic fraction is ground before it is incorporated in the feed mixture.

3. A process according to claim 1 or 2, characterized in that the sieving step (b) is carried out at an elevated temperature and the fine fraction is cooled to a temperature below 750 °C before the separating step (d).

4. A process according to any one of claims 1 to 3, characterized in that step (b) is carried out to include more than 80% of the unmagnetic material in the fine fraction.

### Revendications

1. Procédé pour la production d'acier par réduction directe de matières contenant des oxydes de fer et par fusion de l'éponge de fer selon le procédé d'électro-résistance sous laitier, caractérisé :

a) en ce qu'on réduit en grande partie en éponge de fer les matières métallurgiques résiduelles oxydées qui contiennent des métaux ferreux volatilisables ou des composés de ceux-ci au moyen d'agents de réduction solides contenant du carbone dans le four tubulaire rotatif, en volatilisant en grande partie les métaux non ferreux,

b) en ce qu'on effectue un tamisage entre 3 et 10 mm du produit sortant du four tubulaire rotatif selon le comportement à la désintégration et la granulométrie de chargement des matières résiduelles de telle sorte que la majeure partie de la fraction non magnétique de celles-ci se présente à l'état de produit de fine granulométrie,

c) en ce qu'on utilise les produits de granulométrie grossière dans le procédé d'électro-résistance sous laitier,

d) en ce qu'on soumet les produits de fine granulométrie à une séparation électromagnétique,

e) en ce qu'on introduit la fraction magnétique dans le procédé d'électro-résistance sous laitier et

f) en ce qu'on incorpore la fraction non magnétique par moletage ou par pelletisation dans le mélange de chargement destiné au four tubulaire rotatif.

2. Procédé selon la revendication 1, caractérisé en ce que la fraction non magnétique est broyée avant qu'elle ne soit incorporée dans le mélange de chargement.

3. Procédé selon la revendication 1 ou 2, caractérisé en ce que la séparation par tamisage selon b) s'effectue à chaud et en ce que le produit à fine granulométrie avant la séparation suivant d) est refroidi à une température inférieure à 750 °C.

4. Procédé selon l'une des revendications 1 à 3, caractérisé en ce que selon b) plus de 80 % de la fraction non magnétique se présente à l'état de produit de fine granulométrie.